# EUROPÄISCHE PATENTANMELDUNG

(11) **EP 4 817 395 A1**
(43) Veröffentlichungstag der Anmeldung: **07.10.2026**
(21) Anmeldenummer: 26161313.7
(22) Anmeldetag: 27.02.2026
(51) Int. Cl.: A01D 43/08, A01D 41/127, A01D 75/18, A01D 75/20, G06V 10/82

(54) **LANDWIRTSCHAFTLICHE ERNTEMASCHINE**

(30) Priorität: 04.04.2025 DE 102025113223
(71) Anmelder: CLAAS Selbstfahrende Erntemaschinen GmbH, 33428 Harsewinkel (DE)
(72) Erfinder: Neitemeier, Dennis, 59510 Lippetal (DE); Dirksen, Matthis, 48231 Warendorf (DE); Belau, Sven Carsten, 33332 Gütersloh (DE); Cord-Kruse, Christian, 48231 Warendorf (DE); Titkemeier, Daniel, 49080 Osnabrück (DE)
(74) Vertreter: CLAAS Gruppe

(57) **Zusammenfassung**

Die Erfindung betrifft eine Landwirtschaftliche Erntemaschine, umfassend zumindest ein Arbeitsaggregat (3, 4, 5) zur Bearbeitung und Förderung eines Erntegutstroms (10), eine Kamera (9), welche dazu vorgesehen und eingerichtet ist, Bilder des von dem Arbeitsaggregat (3, 4, 5) bearbeiteten Erntegutstroms (10) zu erfassen, eine Recheneinheit (14), wobei die Recheneinheit (14) und die Kamera (9) derart in Daten übertragender Weise miteinander verbunden sind, dass die Bilder an die Recheneinheit (14) leitbar sind, wobei die Recheneinheit (14) dazu vorgesehen und eingerichtet ist, die Bilder unter Nutzung einer ersten künstlichen Intelligenz und/oder einer zweiten künstlichen Intelligenz derart zu verarbeiten, dass die Recheneinheit (14) in den Bildern abgebildete Gefahrenstoffe erkennt

## Beschreibung

Die Erfindung betrifft eine landwirtschaftliche Erntemaschine gemäß dem Oberbegriff des Anspruchs 1.

Landwirtschaftliche Erntemaschinen wie beispielsweise Feldhäcksler, Mähdrescher oder Ballenpressen fahren beim Ernteeinsatz - selbst angetrieben oder gezogen - über ein Feld, um aufgenommenes Erntegut mit zumindest einem Arbeitsaggregat zu bearbeiten und zu fördern. Zur Erzielung einer hohen Maschinenauslastung findet die Ernte heutzutage bei Tag und bei Nacht statt, wobei mit steigenden Vorfahrtgeschwindigkeiten und wachsenden Arbeitsbreiten laufend versucht wird, die Produktivität des landwirtschaftlichen Ernteprozesses zu erhöhen. Die Bediener der Maschinen müssen dabei viel Aufmerksamkeit für die Koordinierung der komplexen Arbeitsabläufe aufbringen.

Neben einem Anbauort für zu erntende Pflanzen ist das Feld auch Lebensraum von Tieren. Während der Erntefahrt haben die Maschinenbediener landwirtschaftlicher Erntemaschinen daher - neben der Koordinierung des Ernteprozesses - streng darauf zu achten, Kollisionen mit im Feld befindlichen Tieren oder gar Menschen zu vermeiden, da die Erntemaschinen aufgrund ihrer scharfkantigen und leistungsstark angetriebenen Arbeits- und Förderaggregate für Lebewesen in der Regel eine tödliche Gefahr darstellen. Eine im tragischen Kollisionsfall durch die Arbeits- und Förderaggregate stattfindende Verarbeitung der Lebewesen führt darüber hinaus zu Verunreinigungen des Ernteguts, die in der Regel eine Untauglichkeit des Ernteguts zur Verfütterung verursachen. Beispielsweise verenden Milchkühe bei der Einnahme von mit Tierkadaver verseuchter Silage an Botulismus. Bereits ein von einem Feldhäcksler erfasstes Reh kann ein ganzes Silo für die Verfütterung wertlos machen, da es schwierig ist, den verunreinigten Teil des Ernteguts im Silo ausfindig zu machen.

Zur Vermeidung von Kollisionen schlägt beispielsweise die DE 196 08 014 A1 vor, an einem Ballenwickler einen Infrarotsensor zur Wärmeerkennung von Lebewesen anzubringen, der zur Abschaltung des Ballenwicklers führt. In der DE 102 44 822 A1 wird vorgeschlagen, an einem Mähdrescher in einem Gefahrenbereich einen Sensor anzubringen, der Lebewesen nachweist und den Mähdrescher ggf. anhält.

Mit den Sensoren der beschriebenen Erntemaschinen können Lebewesen nicht in jedem Fall erkannt werden. Zum einen ist der Erfassungsbereich von Sensoren stets begrenzt, zum anderen sind Tiere im Pflanzenbestand oft schwer erkennbar, weil sie sich verstecken oder laufend plötzlich vor der Erntemaschine auftauchen. Weiterhin führen wechselnde Einsatzbedingungen zu Beeinträchtigungen der Zuverlässigkeit der Sensoren. Gemäß praktischer Erfahrungen ist jedenfalls - trotz steter Bemühungen - nicht auszuschließen, dass Lebewesen von Erntemaschinen erfasst werden. Dabei entstehen unter anderem wirtschaftliche Schäden aufgrund von Wertverlusten des Ernteguts.

In der DE 10 2011 053 214 A1 wird vorgeschlagen, an einer Erntemaschine eine Sensoranordnung anzuordnen, die zur Erkennung von Gefahrenstoffen im Erntegut, insbesondere tierischen Substanzen, vorgesehen und eingerichtet ist. Bei einer Kollision mit einem Tier kann demnach an einen Bediener der Erntemaschine eine Warnmeldung ausgegeben werden, sodass dieser durch einen Tierkadaver verunreinigtes Erntegut nicht der weiteren Prozesskette zuführt und eine Verfütterung von kontaminierten Erntegut verhindert wird. Die DE 10 2011 053 214 A1 verwendet zur Detektion des Gefahrenstoffs eine Sensoranordnung, die das Erntegut im Infrarotbereich spektroskopisch analysiert. Eine derartige spektroskopische Analyse ist komplex und zusätzlich unterliegt das Spektrum einem sogenannten Sensorrauschen, wodurch die in der DE 10 2011 053 214 A1 vorgeschlagene Lösung keine zuverlässige Detektion von Gefahrenstoffen, insbesondere Tierkadavern ermöglicht.

Es ist deshalb Aufgabe der Erfindung, die beschriebenen Nachteile des Standes der Technik zu vermeiden und insbesondere eine landwirtschaftliche Erntemaschine zu schaffen, die eine zuverlässige Detektion von Gefahrenstoffen im Erntegutstrom erreicht.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird eine landwirtschaftliche Erntemaschine vorgeschlagen, umfassend zumindest ein Arbeitsaggregat zur Bearbeitung und Förderung eines Erntegutstroms, eine Kamera, welche dazu vorgesehen und eingerichtet ist, Bilder des von dem Arbeitsaggregat bearbeiteten Erntegutstroms zu erfassen, eine Recheneinheit, wobei die Recheneinheit und die Kamera derart in Daten übertragender Weise miteinander verbunden sind, dass die Bilder an die Recheneinheit leitbar sind, wobei die Recheneinheit dazu vorgesehen und eingerichtet ist, die Bilder unter Nutzung einer ersten künstlichen Intelligenz und/oder einer zweiten künstlichen Intelligenz derart zu verarbeiten, dass die Recheneinheit in den Bildern abgebildete Gefahrenstoffe erkennt.

Die Erfindung hat viele Vorteile. Die Verwendung der künstlichen Intelligenz in der Recheneinheit hat den besonderen Vorteil, dass diese eine zuverlässige Detektion von Gefahrenstoffen ermöglicht. Demnach wird das Risiko einer Zuführung von kontaminierten Erntegut zu der weiteren Prozesskette, insbesondere der Verfütterung an Tiere vermieden. Die Qualität und die Sicherheit des Ernteguts kann somit sichergestellt und wirtschaftliche Schäden minimiert werden.

Eine vorteilhafte Weiterbildung sieht vor, dass es sich bei dem Gefahrenstoff um eine tierische Substanz handelt. Tierische Substanzen im Erntegut können bei einer späteren Verfütterung des Ernteguts an Nutzierte zu Botulismus führen. Mithin ist es besonders vorteilhaft, wenn tierische Substanzen bereits im Erntevorgang von der Erntemaschine detektiert werden. Weiterhin können tierische Substanz mittels künstlicher Intelligenz besonders zuverlässige detektiert werden.

In besonders bevorzugter Weise kann die erste künstliche Intelligenz als ein trainiertes neuronales Netzwerk, insbesondere ein Convolutional Neural Network ausgebildet sein. Derartige Netzwerke haben sich als besonders geeignet zur Detektion von Gefahrenstoffen in einem Erntegutstrom erwiesen. Weiterhin ist ein trainiertes neuronales Netzwerk zur Detektion von Gefahrenstoffen besonders vorteilhaft, da dieses während der Analyse der Bilder kein Speichern zusätzlicher Daten, wie beispielsweise Bildeigenschaften, erfordert.

Gemäß einer vorteilhaften Ausgestaltung kann das neuronale Netzwerk mit Trainingsdaten trainiert sein, wobei die Trainingsdaten erste Bilder umfassen, die Gefahrenstoffe abbilden und zweite Bilder umfassen, die keine Gefahrenstoffe abbilden.

Zur Detektion von Gefahrenstoffe ist es besonders vorteilhaft, wenn die erste künstliche Intelligenz dazu vorgesehen und eingerichtet ist, für eines oder mehrere der Bilder jeweils eine Wahrscheinlichkeit zu bestimmen, dass in dem jeweiligen Bild ein Gefahrenstoff abgebildet ist. Anhand eines Schwellwerts für die Wahrscheinlichkeit können die Bilder dann auf einfache Art und Weise klassifiziert werden. Insbesondere kann ein derartiger Schwellwert zur Einstellung einer Empfindlichkeit konfigurierbar sein.

Gemäß einer weiteren vorteilhaften Ausgestaltung kann die erste künstliche Intelligenz dazu vorgesehen und eingerichtet sein, die Bilder zumindest zwei Klassen zuzuordnen, wobei vorzugsweise eine Klasse die Bilder umfasst, die keine Gefahrenstoffe enthalten und eine zweite Klasse die Bilder umfasst, die Gefahrenstoffe enthalten.

Eine vorteilhafte Weiterbildung sieht vor, dass die zweite künstliche Intelligenz derart eingerichtet ist, sodass diese im Erntebetrieb der Erntemaschine kontinuierlich Bildeigenschaften der Bilder ermittelt und an einen mit der Recheneinheit in datenübertragender Weise verbundenen Speicher überträgt, wobei die Recheneinheit zur Identifikation einer in den Bildeigenschaften auftretenden Anomalie vorgesehen und eingerichtet ist. Diese Weiterbildung erfordert keine Trainingsdaten zum Trainieren der künstlichen Intelligenz, woraus sich auf Grund der Seltenheit derartiger Trainingsdaten, insbesondere zur Detektion von tierischen Bestandteilen, ein besonderer Vorteil ergibt.

Eine weitere vorteilhafte Weiterbildung sieht vor, dass die Recheneinheit dazu vorgesehen und eingerichtet ist, mittels der ersten künstlichen Intelligenz die Wahrscheinlichkeit zu bestimmen, dass die Bilder, die eine Anomalie aufweisen, einen Gefahrenstoff abbilden. Demgemäß kann mittels der ersten künstlichen Intelligenz sichergestellt werden, dass die mittels der zweiten künstlichen Intelligenz ermittelten, eine Anomalie aufweisenden Bilder, tatsächlich einen Gefahrenstoff abbilden.

Um einen Maschinenbediener über das Vorhandensein eines Gefahrenstoffs zu informieren, kann der Recheneinheit eine Ausgabeeinrichtung zugeordnet sein, die betreibbar ist, eine das Vorhandensein des erkannten Gefahrenstoffs betreffende Information an einen Maschinenbediener auszugeben.

Vorzugsweise kann die Ausgabeeinrichtung eine Anzeigeeinrichtung aufweisen, die derart eingerichtet ist, so dass diese ein identifiziertes Bild mit einem Gefahrenstoff anzeigt. Demnach kann ein Bediener der Erntemaschine überprüfen, ob der identifizierte Gefahrenstoff eine Kontamination des Ernteguts bewirkt.

Eine vorteilhafte Weiterbildung sieht vor, dass die Ausgabeeinrichtung bei Überschreiten einer kritischen Wahrscheinlichkeit für einen Gefahrenstoffs ein Signal an den Maschinenbediener ausgibt. In diesem Fall wird der Maschinenbediener erst dann per Signal gewarnt, wenn eine kritische Wahrscheinlichkeit überschritten ist.

Eine weitere vorteilhafte Weiterbildung sieht vor, dass bei Überschreiten einer kritischen Wahrscheinlichkeit für einen Gefahrenstoffs eine maschinenbezogene Maßnahme ausgelöst wird, insbesondere ein Stoppen der Erntemaschine erzwungen wird. Ein unmittelbares Stoppen der Erntemaschine verhindert die weitere Förderung von Erntegut, sodass kein zusätzliches Erntegut dem kontaminierten Erntegut zugeführt wird.

Vorzugsweise ist die Recheneinheit derart eingerichtet, dass ein Schwellwert, der die kritische Wahrscheinlichkeit definiert, mittels der Anzeigeeinrichtung einstellbar ist. Mithin kann der Fahrer eine Empfindlichkeit einstellen anhand derer ein Bild als kritisch eingestuft wird.

Die vorliegende Erfindung wird nachstehend anhand eines in den Zeichnungen dargestellten Ausführungsbeispiels näher erläutert. Es zeigen:
- Figur 1: eine schematische Seitenansicht eines selbstfahrenden Feldhäckslers vor der Kollision mit einem Reh;
- Figur 2: ein erste künstliche Intelligenz zum Identifizieren eines Gefahrenstoffs;
- Figur 3: eine zweite künstliche Intelligenz zum Identifizieren einer Anomalie in einer Bilderserie;
- Figur 4: eine Anzeigeeinrichtung zum Anzeigen eines Bildes und zum Einstellen eines Schwellwerts.

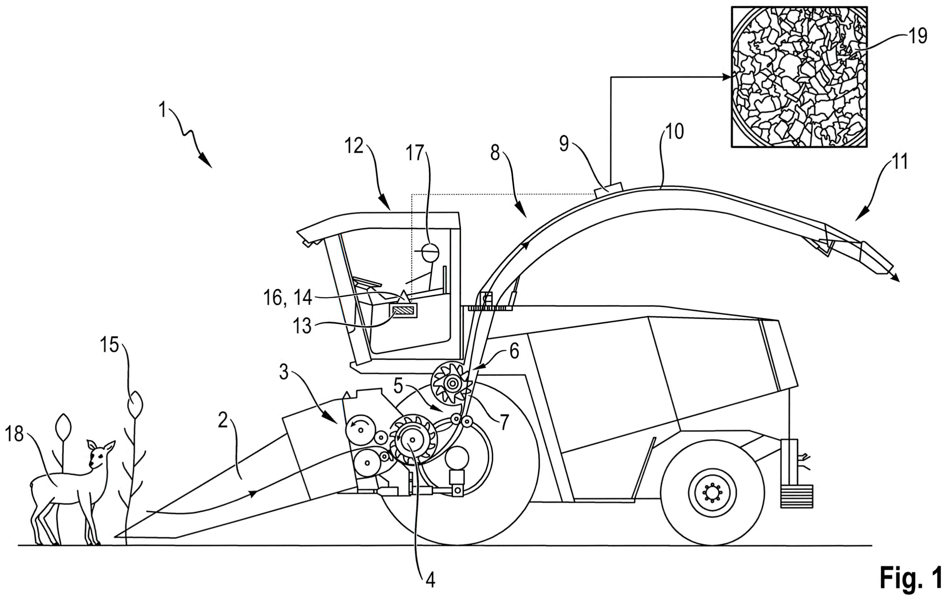

Fig. 1 zeigt eine landwirtschaftliche Erntemaschine in Form eines selbstfahrenden Feldhäckslers 1 gemäß einem bevorzugten Ausführungsbeispiel der Erfindung. Um auf dem Feld wachsenden Pflanzenbestand 15 zu ernten, verfügt der Feldhäcksler 1 über ein Vorsatzgerät 2, das die Pflanzen abschneidet und in Form eines Gutstroms einem mit rotierenden Vorpresswalzen ausgestatteten Einzugsaggregat 3 zuführt. Nach dortiger Vorpressung gelangt der Erntegutstrom 10 in ein Häckselaggregat 4, wo durch Zusammenwirkung einer mit Messern bestückten Häckseltrommel gegenüber einer ruhenden Gegenschneide (jeweils nicht bezeichnet) eine Zerkleinerung auf eine gewünschte Schnittlänge stattfindet. Dem Häckselaggregat 4 schließen sich in Gutstromrichtung (angedeutet durch die Pfeilrichtung des Ernteguts 10 durch die Maschine) eine Konditioniereinrichtung 5 sowie ein Nachbeschleuniger 6 an, die in einem hinter einer Fahrerkabine 12 aufsteigenden Förderschacht 7 angeordnet sind. Der Förderschacht 7 mündet in einem Auswurfkrümmer 8, der zur Überladung des die Arbeitsaggregate 3, 4, 5 durchlaufenen Ernteguts 10 in einen (nicht gezeigten) Ladebehälter dient. Eine am maschinenabgewandten Ende des Auswurfkrümmers 8 angeordnete Auswurfklappe 11 ermöglicht eine Auswurfrichtungssteuerung des aus dem Auswurfkrümmer 8 austretenden Erntegutstrahls. Zur Lenkung und allgemeinen Steuerung des selbstfahrenden Feldhäckslers 1 nimmt ein Bediener in der Fahrerkabine 12 Platz.

Wie in Fig. 1 angedeutet, halten sich im Pflanzenbestand 15 gelegentlich Tiere auf, im gezeigten Beispiel ein Reh 18. Trotz sorgfältiger Überwachung kann es tragischerweise zu Kollisionen mit den Tieren kommen, die abhängig von den jeweiligen Ernteumständen (Dunkelheit, hoher Pflanzenbestand, starker Geräuschpegel) sogar unbemerkt stattfinden können. Bei einem solchen Vorfall gelangen tierische Substanzen über die Bearbeitungs- und Förderorgane des Feldhäckslers 1 in das Erntegut 10. Wenn das Erntegut 10 anschließend in einem Silo gelagert wird, um später als Tierfutter genutzt zu werden, verursacht die Beimischung der tierischen Substanzen eine Unverträglichkeit der Silage. Beispielsweise erkranken bzw. verenden Milchkühe dann an Botulismus. Nach der Ernte ist es äußerst schwierig bzw. unmöglich, in der Silage verseuchte Bereiche ausfindig zu machen. Folglich entsteht durch derartige Wildunfälle unter anderem ein erheblicher wirtschaftlicher Schaden.

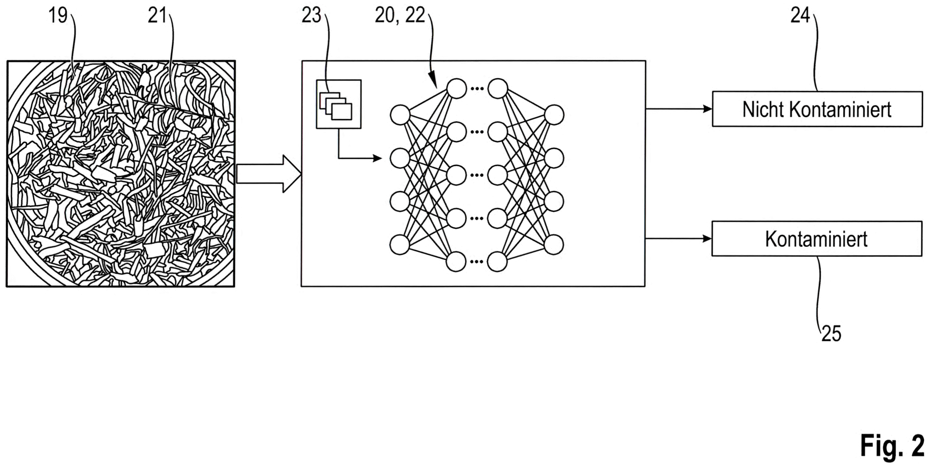

Der erfindungsgemäße Feldhäcksler 1 gemäß Fig. 1 verfügt über eine Kamera 9, die Bilder 19 des bearbeiteten Erntegutstroms 10 aufnimmt. Die Kamera 9 ist in Daten übertragender Weise mit einer Recheneinheit 14 verbunden, wobei die Bilder 19 der Kamera 9 an die Recheneinheit 14 übertragen werden. Zur Schadensminderung umfasst die Recheneinheit 14 eine in Fig. 2 dargestellte, erste künstliche Intelligenz 20 die dazu vorgesehen und eingerichtet ist einen Gefahrenstoff 21 in den Bildern 19 zu erkennen. Im Fall der Fig. 1 handelt es sich bei dem Gefahrenstoff 21 um eine tierische Substanz (z.B. Blut, Fleisch, Knochen) eines erfassten Tiers. Im Fall der Fig. 2 handelt es sich bei dem Gefahrenstoff 21 um eine Feder. Zur Erkennung des jeweiligen Gefahrenstoffs 21 wird das den Auswurfkrümmer 8 durchströmende Erntegut 10 im rückenseitigen Bereich des Auswurfkrümmers 8, also an der gebogenen Außenwand, an welcher das bearbeitete Erntegut 10 entlang gleitet, bildlich erfasst.

Die erste künstliche Intelligenz 20 ist als ein trainiertes neuronales Netzwerk, vorzugsweise ein Convolutional Neural Network 22 ausgebildet. Die erste künstliche Intelligenz 20 ist zur Erkennung des Gefahrenstoffs 21 ausgebildet, indem diese mit Trainingsdaten 23 trainiert ist. Hierbei umfassen die Trainingsdaten 23 zum einen Bilder 19 von Erntegutbestandteilen, die keine Gefahrenstoffe 21 enthalten und zum anderen Bilder 19 von Erntegutbestandteilen, in denen zusätzlich tierische Substanzen als Gefahrenstoffe 21 abgebildet sind. Ein Beispiel für ein Bild 19, das keinen Gefahrenstoff 21 aufweist, ist in Fig. 1 dargestellt. Das Bild 19 der Fig. 1 zeigt einen Ausschnitt eines Häckselgutstroms bei einem Häckselvorgang von Maispflanzen. Auf Grundlage der Trainingsdaten 23 werden von der ersten künstlichen Intelligenz 20 in den von der Kamera 9 aufgenommenen Bildern 19 tierische Substanzen detektiert, wobei die Bilder in zwei Klassen 24, 25 eingeteilt werden. Die erste Klasse 24 umfasst Bilder 19, die nicht mit Gefahrenstoffen 21 kontaminiertes Erntegut enthält und die zweite Klasse 25 umfasst Bilder 19, die mit Gefahrenstoffen 21 kontaminiertes Erntegut enthalten.

Hier und vorzugsweise ist die erste künstliche Intelligenz 20 dazu vorgesehen und eingerichtet, für die von der Kamera 9 aufgenommenen Bilder 19 eine Wahrscheinlichkeit dafür zu bestimmen, dass in dem jeweiligen Bild 19 ein Gefahrenstoff 21 abgebildet ist. Zusätzlich oder alternativ kann die erste künstliche Intelligenz 20 dafür vorgesehen und eingerichtet sein, für ein eingegebenes Bild 19 eine Wahrscheinlichkeit zu bestimmen, gemäß derer das Bild 19 keinen Gefahrenstoff 21 enthält und demnach nicht kontaminiert ist. Die vorstehend beschriebene Klassifizierung kann beispielsweise auf Grundlage der ermittelten Wahrscheinlichkeit durchgeführt werden.

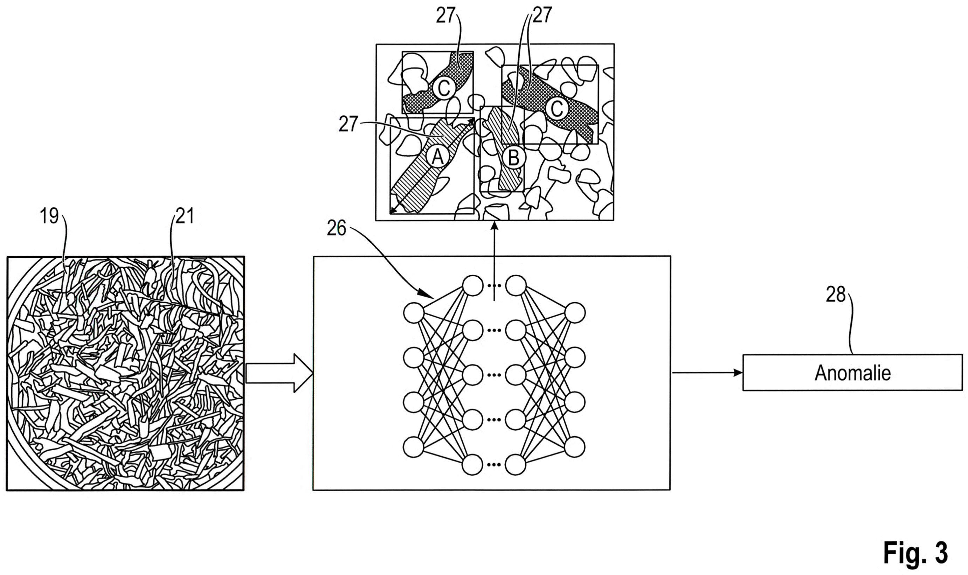

Zusätzlich oder als Alternative zu der ersten künstlichen Intelligenz 20 kann die Recheneinheit 14 eine in Fig. 3 dargestellte zweite künstliche Intelligenz 26 umfassen. Die zweite künstliche Intelligenz 26 ist derart eingerichtet, sodass diese im Erntebetrieb der Erntemaschine kontinuierlich Bildeigenschaften 27 der Bilder 19 ermittelt und an einen mit der Recheneinheit 14 in datenübertragender Weise verbundenen Speicher 16 überträgt, wobei die Recheneinheit 14 zur Identifikation einer in den Bildeigenschaften 27 auftretenden Anomalie 28 vorgesehen und eingerichtet ist. Die zweite künstliche Intelligenz 26 umfasst - wie in der Bildverarbeitung üblich - ein mehrschichtiges neuronales Netz. Hierbei umfasst das neuronale Netz eine erste Schicht, welche als Input-Layer bezeichnet wird, eine weitere Schicht, die das Ergebnis zurückgibt und als Output-Layer bezeichnet wird, sowie mehrere als Hidden-Layer bezeichnete Schichten, die zwischen dem Input-Layer und dem Output-Layer angeordnet sind. In den Hidden-Layern werden die Bildeigenschaften 27 aus den Bildern 19 ermittelt, welche anschließend vom Output-Layer zur Berechnung des Ergebnis genutzt werden. Die in den Hidden-Layern extrahierten Bildeigenschaften 27 werden in dem Speicher 16 gespeichert. Um Anomalien 28 zu identifizieren, werden die Bildeigenschaften 27 von der Recheneinheit 14 miteinander verglichen. Kontaminiertes Erntegut tritt in der Praxis selten auf, sodass dieses als Anomalie 28 mit signifikant abweichenden Bildeigenschaften 27 erkannt wird. Mit anderen Worten ist die Recheneinheit 14 mittels der zweiten künstlichen Intelligenz 26 dazu vorgesehen und eingerichtet im bestimmungsgemäßen Erntebetrieb der Erntemaschine 1 kontinuierlich Bildeigenschaften 27 zu extrahieren, in dem Speicher 16 zu Speichern und zur Detektion einer Anomalie 28 miteinander zu vergleichen.

Gemäß einer Ausführungsform der Erfindung ist die Recheneinheit 14 dazu vorgesehen und eingerichtet die erste künstliche Intelligenz 20 und die zweite künstliche Intelligenz 26 zur Ermittlung des Gefahrenstoffs 21 zu kombinieren. Hierbei ist die Recheneinheit 14 dazu vorgesehen und eingerichtet in einem ersten Schritt mittels der zweiten künstlichen Intelligenz 26 ein Bild 19 zu detektieren, dessen Bildeigenschaften 27 eine Anomalie 28 gegenüber weiteren im Ernteeinsatz der Erntemaschine 1 aufgenommenen Bildern 19 aufweist. In einem zweiten Schritt wird mittels der ersten künstlichen Intelligenz 20 die Wahrscheinlichkeit ermittelt, dass das die Anomalie 28 aufweisende Bild 19 einen Gefahrenstoff 21 abbildet.

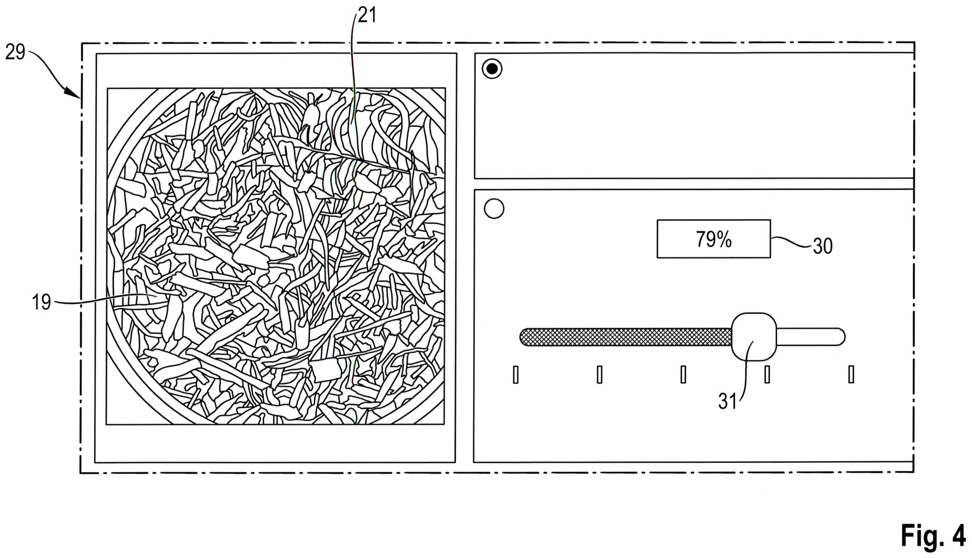

Im Falle einer Detektion eines Gefahrenstoffs 21, insbesondere einer kritischen Wahrscheinlichkeit für einen 21, wird ein Signal an eine mit der Recheneinheit 14 verbundene Ausgabeeinrichtung 13 gesendet, so dass der Maschinenbediener 17 über das Vorhandensein eines Gefahrenstoffs 21 informiert ist. Die Ausgabe kann beispielsweise optisch über eine in Fig. 4 dargestellte Anzeigeeinrichtung 29 und/oder akustisch hörbar erfolgen, so dass der Maschinenbediener 17 auch während der aufmerksamen Verfolgung anderer Vorgänge schnellstmöglich von der Gefahr Kenntnis erlangt. Hier und vorzugsweise wird von der Anzeigeeinrichtung 29 das Bild 19 mit einem darin identifizierten Gefahrenstoff 21 angezeigt. Vorteilhaft wird der Bediener 17 dabei auch über die Art des Gefahrenstoffs 21 und ggf. über dessen relative Menge im Erntegut 10 informiert. Weiterhin können bei einer Detektion eines Gefahrenstoffs 21 eine maschinenbezogene Maßnahme ausgelöst werden, wie z.B. das Stoppen des Feldhäckslers 1. Hier und vorzugsweise wird bei bei einer durch die erste künstliche Intelligenz 20 ermittelten Wahrscheinlichkeit für das Vorhandensein eines Gefahrenstoffs 21 die größer als ein mittels eines Schiebereglers 31 einstellbarer Schwellwert 30 ist, die Wahrscheinlichkeit für einen Gefahrenstoff 21 als kritisch eingestuft.

### Bezugszeichenliste:

- 1: Landwirtschaftliche Erntemaschine
- 2: Vorsatzgerät
- 3: Einzugsaggregat
- 4: Häckselaggregat
- 5: Konditioniereinrichtung
- 6: Nachbeschleuniger
- 7: Förderschacht
- 8: Auswurfkrümmer
- 9: Kamera
- 10: Erntegutstrom
- 11: Auswurfklappe
- 12: Fahrerkabine
- 13: Ausgabeeinrichtung
- 14: Recheneinheit
- 15: Pflanzenbestand
- 16: Speicher
- 17: Maschinenbediener
- 18: Reh
- 19: Bild
- 20: Erste künstliche Intelligenz
- 21: Gefahrenstoff
- 22: Convolutional Neural Network
- 23: Trainingsdaten
- 24: Erste Klasse
- 25: Zweite Klasse
- 26: Zweite künstliche Intelligenz
- 27: Bildeigenschaften
- 28: Anomalie
- 29: Anzeigeeinrichtung
- 30: Schwellwert
- 31: Schieberegler

## Patentansprüche

1. Landwirtschaftliche Erntemaschine (1) umfassend
zumindest ein Arbeitsaggregat (3, 4, 5) zur Bearbeitung und Förderung eines Erntegutstroms (10);
eine Kamera (9), welche dazu vorgesehen und eingerichtet ist, Bilder (19) des von dem Arbeitsaggregat (3, 4, 5) bearbeiteten Erntegutstroms (10) zu erfassen;
eine Recheneinheit (14), wobei die Recheneinheit (14) und die Kamera (9) derart in Daten übertragender Weise miteinander verbunden sind, dass die Bilder (19) an die Recheneinheit (14) leitbar sind,
**dadurch gekennzeichnet, dass**
die Recheneinheit (14) dazu vorgesehen und eingerichtet ist, die Bilder (19) unter Nutzung einer ersten künstlichen Intelligenz (20) und/oder einer zweiten künstlichen Intelligenz (26) derart zu verarbeiten, dass die Recheneinheit (14) in den Bildern (19) abgebildete Gefahrenstoffe (21) erkennt.

2. Landwirtschaftliche Erntemaschine (1) nach Anspruch 1, **dadurch gekennzeichnet, dass** es sich bei dem Gefahrenstoff (21) um eine tierische Substanz handelt.

3. Landwirtschaftliche Erntemaschine (1) nach einem der Ansprüche 1 bis 2, **dadurch gekennzeichnet, dass** die erste künstliche Intelligenz (20) ein trainiertes neuronales Netzwerk, insbesondere ein trainiertes Convolutional Neural Network (22) ist.

4. Landwirtschaftliche Erntemaschine (1) nach Anspruch 3, **dadurch gekennzeichnet, dass** das neuronale Netzwerk mit Trainingsdaten (23) trainiert ist, wobei die Trainingsdaten (23) erste Bilder (19) umfassen, die Gefahrenstoffe (21) abbilden und zweite Bilder (19) umfassen, die keine Gefahrenstoffe (21) abbilden.

5. Landwirtschaftliche Erntemaschine (1) nach einem der Ansprüche 3 bis 4, **dadurch gekennzeichnet, dass** die erste künstliche Intelligenz (20) dazu vorgesehen und eingerichtet ist, für eines oder mehrere der Bilder (19) jeweils eine Wahrscheinlichkeit zu bestimmen, dass in dem jeweiligen Bild (19) ein Gefahrenstoff (21) abgebildet ist.

6. Landwirtschaftliche Erntemaschine (1) nach einem der Ansprüche 3 bis 5, **dadurch gekennzeichnet, dass** die erste künstliche Intelligenz (20) dazu vorgesehen und eingerichtet ist, die Bilder (19) zumindest zwei Klassen (24, 25) zuzuordnen, wobei vorzugsweise eine erste Klasse (24) die Bilder (19) umfasst, die keine Gefahrenstoffe (21) enthalten und eine zweite Klasse (25) die Bilder (19) umfasst, die Gefahrenstoffe (21) enthalten.

7. Landwirtschaftliche Erntemaschine (1) nach einem der Ansprüche 1 bis 6, **dadurch gekennzeichnet, dass** die zweite künstliche Intelligenz (26) derart eingerichtet ist, sodass diese im Erntebetrieb der Erntemaschine (1) Bildeigenschaften (27) der Bilder (19) ermittelt und an einen mit der Recheneinheit (14) in datenübertragender Weise verbundenen Speicher (16) überträgt, wobei die Recheneinheit (14) zur Identifikation einer in den Bildeigenschaften (27) auftretenden Anomalie (28) vorgesehen und eingerichtet ist.

8. Landwirtschaftliche Erntemaschine (1) nach Anspruch 7, **dadurch gekennzeichnet, dass** die Recheneinheit (14) dazu vorgesehen und eingerichtet ist, mittels der ersten künstlichen Intelligenz (20) die Wahrscheinlichkeit zu bestimmen, dass die Bilder (19), die eine Anomalie (28) aufweisen, einen Gefahrenstoff (21) abbilden.

9. Landwirtschaftliche Erntemaschine (1) nach einem der Ansprüche 1 bis 8, **dadurch gekennzeichnet, dass** der Recheneinheit (14) eine Ausgabeeinrichtung (13) zugeordnet ist, die betreibbar ist, eine das Vorhandensein des erkannten Gefahrenstoffs (21) betreffende Information an einen Maschinenbediener (17) auszugeben.

10. Landwirtschaftliche Erntemaschine (1) nach Anspruch 9, **dadurch gekennzeichnet, dass** die Ausgabeeinrichtung (13) eine Anzeigeeinrichtung (29) aufweist, die derart eingerichtet ist, so dass diese ein identifiziertes Bild (19) mit einem Gefahrenstoff (21) anzeigt.

11. Landwirtschaftliche Erntemaschine (1) nach einem der Ansprüche 1 bis 11, **dadurch gekennzeichnet, dass** die Ausgabeeinrichtung (13) bei Überschreiten einer kritischen Wahrscheinlichkeit für einen Gefahrenstoff (21) ein Signal an den Maschinenbediener (17) ausgibt.

12. Landwirtschaftliche Erntemaschine (1) nach einem der Ansprüche 1 bis 12, **dadurch gekennzeichnet, dass** bei Überschreiten einer kritischen Wahrscheinlichkeit für einen Gefahrenstoff (21) eine maschinenbezogene Maßnahme ausgelöst wird, insbesondere ein Stoppen der Erntemaschine (1) erzwungen wird.

13. Landwirtschaftliche Erntemaschine (1) nach einem der Ansprüche 11 bis 12, **dadurch gekennzeichnet, dass** die Recheneinheit (14) derart eingerichtet ist, so dass ein Schwellwert (30), der die kritische Wahrscheinlichkeit definiert, mittels der Anzeigeeinrichtung (29) einstellbar ist.
